Europäisches Patentamt

European Patent Office

Office européen des brevets

(11) Veröffentlichungsnummer: **0 272 367**
**B1**

(12) # EUROPÄISCHE PATENTSCHRIFT

(45) Veröffentlichungstag der Patentschrift:
**17.01.90**

(51) Int. Cl.⁴: **F16J 15/34, F16J 15/40**

(21) Anmeldenummer: **87106888.8**

(22) Anmeldetag: **12.05.87**

(54) **Gleitringdichtung.**

(30) Priorität: **11.11.86  DE 3638513**

(43) Veröffentlichungstag der Anmeldung:
**29.06.88 Patentblatt 88/26**

(45) Bekanntmachung des Hinweises auf die Patenterteilung:
**17.01.90 Patentblatt 90/3**

(84) Benannte Vertragsstaaten:
**AT BE CH DE ES FR GB IT LI LU NL SE**

(56) Entgegenhaltungen:
**DE-A- 2 623 370**
**DE-A- 3 319 041**

(73) Patentinhaber: **Firma Carl Freudenberg, Höhnerweg 4, D-6940 Weinheim/Bergstrasse(DE)**

(72) Erfinder: **Kraus, Reinhold, Hoffeldstrasse 8, D-6942 Mörlenbach(DE)**

(74) Vertreter: **Weissenfeld-Richters, Helga, Dr., Höhnerweg 2, D-6940 Weinheim/Bergstrasse(DE)**

## Beschreibung

Die Erfindung betrifft eine Gleitringdichtung nach dem Oberbegriff von Anspruch 1.

Eine Gleitringdichtung dieser Art ist aus der GB-PS 807 718 bekannt. Sie hat wenig befriedigende Gebrauchseigenschaften in bezug auf Medien, welche zur Bildung von Ablagerungen neigen. Entsprechende Ablagerungen entstehen insbesondere in innerhalb der dynamischen Abdichtungszone liegenden Ringraum und können neben einem erhöhten Verschleiß ein vorzeitiges Undichtwerden der Dichtung zur Folge haben. Eine regelmäßige Beseitigung entsprechender Ablagerungen ist daher unverzichtbar, jedoch bei den bekannten Ausführungen mit einem erheblichen Arbeitsaufwand verbunden.

Der Erfindung liegt die Aufgabe zugrunde, eine Gleitringdichtung zu zeigen, die es erlaubt, die betriebsbedingt auftretenden Ablagerungen aus dem radial innerhalb der dynamischen Abdichtungszone liegenden Ringraum und gegebenenfalls der Feder aufnehmenden Kammer leichter zu entfernen.

Diese Aufgabe wird erfindungsgemäß bei einer Gleitringdichtung der eingangs ganannten Art dadurch gelöst, daß die Kammer mit einer von außen zugänglichen Eintrittsleitung für ein fließfähiges Reinigungsmittel versehen ist, daß die Öffnung als Austrittsöffnung für das Reinigungsmittel ausgebildet ist und daß von dem Ringraum eine Rückleitung nach außen geführt ist. Das fließfähige Reinigungsmittel gelangt durch diese Ausbildung in alle Zonen, in denen betriebsbedingte Ablagerungen entstehen können. Entsprechende Ablagerungen werden dadurch aufgelöst und nach außen abgeführt. Eine Einspeisung des Reinigungsmittels bei drehender Welle hat sich als vorteilhaft bewährt, weil in diesem Falle eine besonders gleichmäßige Umfangsbeaufschlagung der dynamischen Abdichtungszone gewährleistet ist.

Auch die Kammer, in der Ablagerungen zu einer Beeiträchtigung der Beweglichkeit der Feder führen könnten, wird gleichmäßig durchspült.

Die Eintrittsleitung und die Rückleitung sind zweckmäßig mit Anschlüssen für die Zu- und Ableitung des Reinigungsmittels versehen. Die Ver- und Entsorgung der erfindungsgemäßen Gleitringdichtung ist hierdurch vereinfacht.

Als Reinigungsmittel können alle einschlägig verwendeten Substanzen verwendet werden. Wasser, Dampf sowie Lösungsmittel gelangen bevorzugt zur Anwendung.

Die erfindungsgemäße Gleitringdichtung wird nachfolgend anhand der als Anlage beigefügten Zeichnung weiter erläutert. Es zeigen:

Figur 1 eine Gleitringdichtung in längsgeschnittener Darstellung

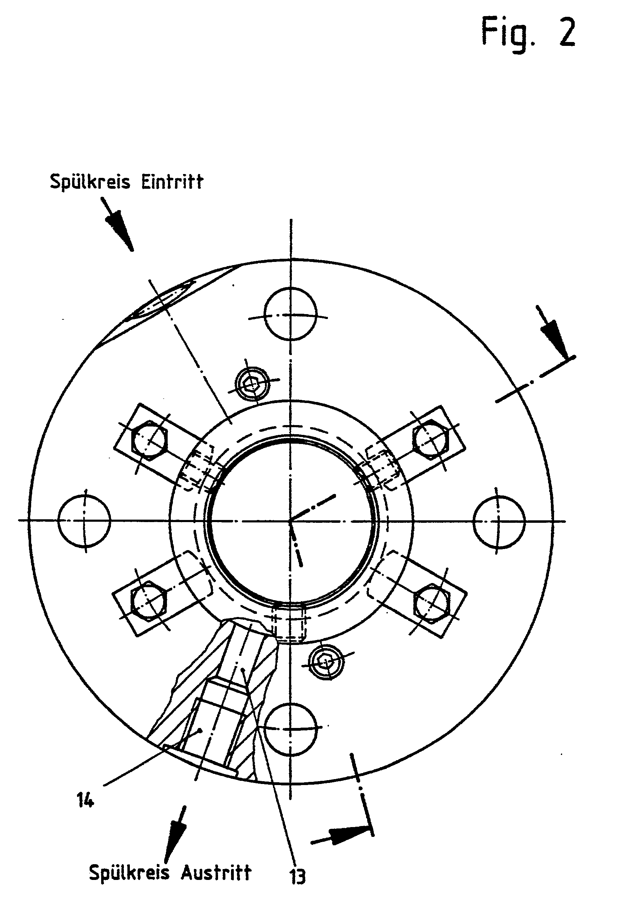

Figur 2 die Gleitringdichtung nach Figur 1 in einer Ansicht von außen.

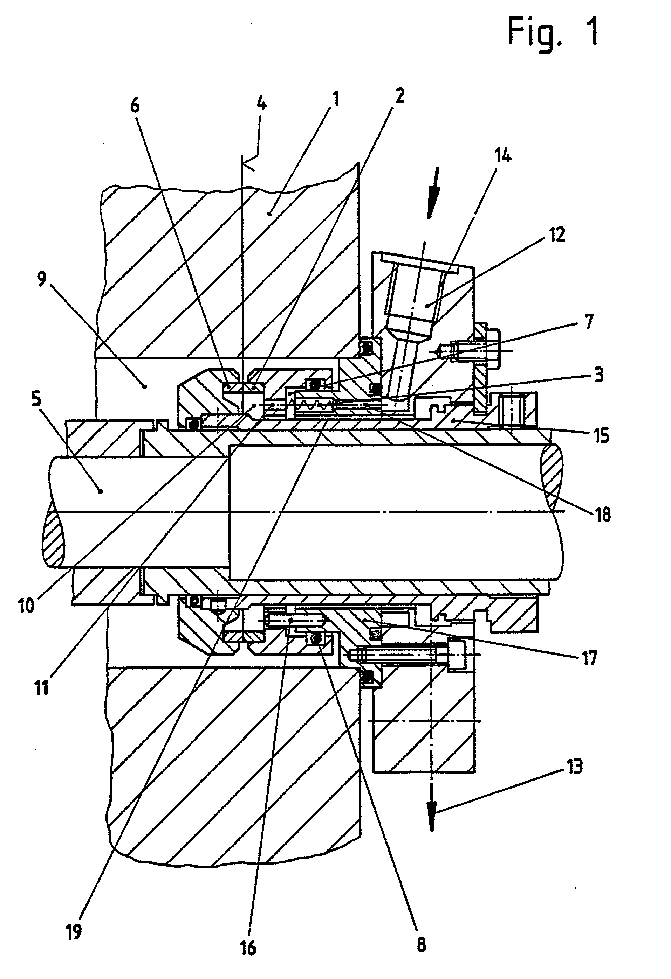

Die in Figur 1 gezeigte Gleitringdichtung dient der Abdichtung der Welle 5 gegenüber dem umschließenden Gehäuse 1. Sie umfaßt den Gleitring 2, der durch sechs gleichmäßig auf dem Umfang verteilte Federn 3 unter einer elastischen Vorspannung an der Dichtfläche 4 des Gegenringes 6 anliegt. Die Federn 3 sind in axialen Ausnehmungen des Stützringes 17 gelagert, der radial außerhalb der Federn durch eine Zylinderfläche begrenzt ist, an welcher die Dichtung 8 des Gegenringes 2 anliegt. Das in dem abzudichtenden Raum 9 enthaltene Medium vermag dadurch die Räume, in denen die Federn 3 angeordnet sind bzw. vorspringen, nicht zu erreichen.

Die ineinander übergehenden Räume bilden gemeinsam die Kammer 7. Diese ist durch Bohrungen 18 mit der Eintrittleitung 12 verbunden, welche der Achse der Federn 3 konzentrisch zugeordnet sind und in den innenseitigen Zylinderraum der Federn 3 münden. Die Bohrungen 18 finden am anderen axialen Ende der Federn 3 ihre Fortsetzung in den Öffnungen 11, so daß der Hauptstrom des durch die Eintrittsleitung 12 zugeführten Reinigungsmittels in den radial innerhalb der Dichtfläche 4 angeordneten Ringraum geleitet wird. Ein Nebenstrom vermag die Windungen der Feder 3 in seitliche Richtung zu basieren und auf diese Weise die Kammer 7 und den Bereich der Dichtung 8 zu erreichen. Neben dem Bereich des Ringraumes 10 ergibt sich dadurch auch in diesen Bereichen eine gute Beaufschlagung eventuell entstandener Ablagerungen mit dem Reinigungsmittel und damit deren Auflösung und Abführung. Letztere erfolgt über die Rückleitung 13, welche durch den Ringspalt 19 mit den vorgenannten Bereichen verbunden ist.

Sowohl die Eintrittsleitung 12 als auch die Rückleitung 13 sind mit Anschlüssen 14 versehen, welche die unmittelbare Anbindung an Ver- und Entsorgungseinrichtungen erleichtern. Die Beseitigung eventuell entstandener Ablagerungen aus der Gleitringdichtung bereitet daher keine Mühe.

Der Gleitring 2 und der Gegenring 6 der erfindungsgemäßen Gleitringdichtung können hinsichtlich der Werkstoffwahl und hinsichtlich der Oberflächenbeschaffenheit den bekannten Ausführungen entsprechen. Sie bilden bei der gezeigten Ausführung eine montagefertige Einbaueinheit, welche ohne weiteren Justieraufwand unmittelbar verwendungsfähig ist.

Bezugszeichenliste

1 Gehäuse
2 Gleitring
3 Feder
4 Dichtfläche
5 Welle
6 Gegenring
7 Kammer
8 Dichtring
9 abzudichtender Raum
10 Ringraum
11 Öffnung (Austrittsöffnung)
12 Eintrittsleitung
13 Rückleitung
14 Anschluß
15 Hülle
16 Verdrehsicherung
17 Stützring
18 Bohrung
19 Ringspalt

**Patentansprüche**

1. Gleitringdichtung, bei der der dem Gehäuse (1) unverdrehbar zugeordnete Gleitring (2) durch wenigstens eine Feder (3) an die dynamische Dichtfläche (4) des mit der Welle (5) umlaufenden Gegenringes (6) angepreßt ist, bei der die Feder (3) in einer Kammer (7) angeordnet ist, welche durch eine Dichtung (8) von dem abzudichtenden Raum (9) abgetrennt ist und wenigstens eine in den Ringraum (10) radial innerhalb der Dichtfläche (4) mündende Öffnung (11) aufweist, dadurch gekennzeichnet, daß die Kammer (7) mit einer von außen zugänglichen Eintrittsleitung (12) für ein fließfähiges Reinigungsmittel versehen ist, daß die Öffnung (11) als Austrittsöffnung ausgebildet ist und daß von dem Ringraum (10) eine Rückleitung (13) nach außen geführt ist.

2. Gleitringdichtung nach Anspruch 1, dadurch gekennzeichnet, daß die Eintrittsleitung (12) und die Rückleitung (13) mit Anschlüssen (14) für die Zu- und Ableitung des Reinigungsmittels versehen sind.

**Claims**

1. A mechanical seal, in which the slip ring (2) correlated with the casing (1) in a non-rotatable manner is pressed by at least one spring (3) onto the dynamic sealing surface (4) of the counter-ring (6) rotating with the shaft (5), and in which spring (3) is arranged in a chamber (7) which is separated by a seal (8) from the space (9) to be sealed off and has at least one aperture (11) opening out radially into the annular space (10) within the sealing surface (4), characterized in that the chamber (7) is provided with an inlet line (12), accessible from the outside, for a free-flowing cleaning agent, in that the aperture (11) is designed as an outlet aperture and in that a return line (13) is led from the annular space (10) to the outside.

2. A mechanical seal according to claim 1, characterized in that the inlet line (12) and the return line (13) are provided with connections (14) for the inflow and outflow of the cleaning agent.

**Revendications**

1. Joint d'étanchéité à bague glissante dans lequel la bague glissante (2), montée sans possibilité de rotation dans le logement (1), est pressée par au moins ressort (3) contre la surface d'étanchéité dynamique (4) de la contre-bague (6) tournant avec l'arbre (5), dans lequel le ressort (3) est disposé dans une chambre (7) qui est séparée par un joint (8) de l'enceinte à rendre étanche (9) et qui présente au moins un orifice (11) débouchant radialement à l'intérieur de la surface d'étanchéité (4) dans l'enceinte annulaire (10), caractérisé en que la chambre (7) est pourvue d'une conduite d'entrée (12) accessible de l'extérieur pour un produit de nettoyage fluide, en ce que l'orifice (11) est disposé comme orifice de sortie et qu'une conduite de retour (13) part de l'enceinte annulaire (10) vers l'extérieur.

2. Joint d'étanchéité à bague glissante selon la revendication 1, caractérisé en ce que la conduite d'entrée (12) et la conduite de retour (13) sont pourvues de raccords (14) pour les conduites d'adduction et d'évacuation du produit de nettoyage.

# Fig. 1

Fig. 2

Spülkreis Eintritt

14

Spülkreis Austritt    13